# EUROPÄISCHE PATENTSCHRIFT

(11) **EP 0 467 064 B1**
(45) Veröffentlichungstag und Bekanntmachung des Hinweises auf die Patenterteilung: **07.12.1994**
(21) Anmeldenummer: 91109431.6
(22) Anmeldetag: 08.06.1991
(51) Int. Cl.: H02K 5/14

(54) **Kohlenbürstenträger**
Holder of carbon brushes
Support de balais de charbon

(30) Priorität: 13.06.1990 DE 4018846
(43) Veröffentlichungstag der Anmeldung: 22.01.1992
(73) Patentinhaber: Kabelwerke Reinshagen GmbH, D-42369 Wuppertal (DE)
(72) Erfinder: Gerdel, Wilfried, Dipl.-Ing., W-5600 Wuppertal 22 (DE); Larisch, Markus, Dipl.-Ing., W-4630 Bochum 6 (DE)
(74) Vertreter: Priebisch, Rüdiger, Dipl.-Ing., Dipl.-Wirtsch.-Ing. (FH)

(56) Entgegenhaltungen:
- EP-A- 0 335 352
- DE-A- 3 823 404

## Beschreibung

Die Erfindung betrifft einen Kohlenbürstenträger aus Kunststoff für den Kommutator eines Elektromotors, welcher mit den erforderlichen elektrischen und elektronischen Bauelementen, z.B. Drosseln, Kondensatoren und Thermoschalter, bestückt ist und welcher ein Grundgehäuse, das mit einwärts gerichteten Führungswänden zur Aufnahme der Kohlenbürsten versehen ist, eine Motordichtung und ein elektrische Leitungen tragendes, der motorfernen Stirnfläche des Grundgehäuses zugeordnetes Oberteil aufweist.

Bei einem derartigen in der Präambel definierten und durch die EP-A-0335 352 bekannten Kohlenbürstenträger besteht das Grundgehäuse aus einem becherförmigen Träger, der zur Bildung von für die Bauelemente bestimmten Aufnahmekammern doppelwandig ausgebildet ist und bei der der Träger mit einer als Ansatz ausgebildeten Durchführung für elektrische Leitungen versehen ist. Dieser bekannte Kohlenbürstenträger kann im wesentlichen nur manuell mit den elektrischen und elektronischen Bauelementen bestückt werden, weshalb er im Hinblick auf eine rationelle Massenfertigung nicht befriedrigt.

Aufgabe der vorliegenden Erfindung ist es, einen Kohlenbürstenträger der eingangs genannten Art so auszubilden, daß er zur Ermöglichung einer rationellen Massenfertigung für eine maschinelle Bestückung und eine weitestgehend maschinelle Montage geeignet ist.

Zur Lösung dieser Aufgabe sind erfindungsgemäß die Merkmale A) bis G) des Patentanspruchs 1 vorgesehen.

Die Erfindung erbringt eine Reihe von Vorteilen. Zum einen kann ein vorkonfektionierter Leitungssatz verwendet werden, dessen verschiedene Anschlußleitungen in einem einfachen Arbeitsgang in die Durchführungskanäle der Motordichtung bis zum Wiederaustreten ihrer vorverzinnten Anschlußenden hindurchgeschoben werden können, wonach die Durchführungskanäle mit Gießharz oder dergleichen ausgegossen werden können. Zum anderen kann ebenfalls für sich die als Oberteil vorgesehene gedruckte Leiterplatte mit den elektronischen Bauelementen mittels relativ einfacher Automaten bestückt werden. Das Grundgehäuse selbst wird gemäß einer bevorzugten Ausführungsform nur mit den Kohlenbürsten bestückt, wozu das Grundgehäuse mit Einschubfenstern für die Kohlenbürsten versehen ist, die durch Seitendeckel verschließbar sind. Nach ihrer Bestückung werden Motordichtung, Grundgehäuse und Leiterplatte zusammengesteckt, wozu geeignete Zentriereinrichtungen und Schnappverbindungen vorgesehen sind, und anschließend werden die Anschlußleitungen an der Oberseite der Leiterplatte verlötet. Aufgrund dieser getrennten Bestückung der einzelnen Bauteile des Kohlenbürstenträgers sind nur relativ einfache Bewegungsabläufe auszuführen, für die in:wirtschaftlicher Weise Automaten eingesetzt werden können und die, wenn es sich nur um kleinere Fertigungsserien handeln sollte, insbesondere im Falle der Bestückung des Grundgehäuses mit den Kohlenbürsten, auch bequem von Hand vorgenommen werden könnten. Die Seitendeckel sind dabei vom Grundgehäuse abnehmbar, so daß ein Austausch verschlissener Kohlenbürsten mit einfachen Handgriffen möglich ist.

In Weiterbildung der Erfindung kann ferner vorgesehen werden, daß am Grundgehäuse radial nach außen hin offene Aufnahmebetten für die zu den Kohlenbürsten führenden Kupferlitzen vorgesehen sind und daß diese Seitendeckel mit radial einwärts gerichteten Klemmansätzen zur Festsetzung der Kupferlitzen in den Aufnahmebetten versehen sind. Durch diese Maßnahme ist sichergestellt, daß die Bewegung der Kohlenbürsten ohne Einfluß auf die Anlötstellen der Kupferlitzen an der Leiterplatte bleibt und somit der Gefahr eines Materialbruches an den Litzenanschlüssen sicher vorgebeugt ist.

Bei einer Ausgestaltung der Erfindung kann ferner vorgesehen werden, daß das Grundgehäuse mit einer zentralen, ausbrechbaren Hülse als Kohlenbürstenanschlag versehen ist. Beim zusammengebauten Kohlenbürstenträger hält diese Hülse die Kohlenbürsten von dem für den Einschub des Kommutators benötigten Raum fern; erst beim bzw. durch Einschub des Kommutators wird diese Hülse herausgebrochen und entfernt.

Weitere Ausgestaltungen der Erfindung sind in den Unteransprüchen angegeben und nachfolgend anhand eines in der Zeichnung dargestellten Ausführungsbeispieles näher erläutert. In der Zeichnung zeigen:
- Fig. 1: in einer schematischen Explosivdarstellung einen Kohlenbürstenträger nach der Erfindung,
- Fig. 2: den Kohlenbürstenträger in montiertem Zustand,
- Fig. 3: eine Draufsicht auf das Grundgehäuse des Kohlenbürstenträgers,
- Fig. 4: einen Schnitt gemäß der Linie IV-IV in Fig. 3,
- Fig. 5: einen Schnitt gemäß der Linie V-V in Fig. 3,
- Fig. 6: einen Schnitt gemäß der Linie VI-VI in Fig. 3,
- Fig. 7: einen Schnitt gemäß der Linie VII-VII in Fig. 3,
- Fig. 8: eine Teilseitenansicht gemäß der Blickrichtung VIII-VIII in Fig. 3 in den Kohlenbürstenschacht des Grundgehäuses,
- Fig. 9: einen der Seitendeckel des Grundgehäuses in Seitenansicht,
- Fig. 10: eine Draufsicht auf den Seitendeckel, in Fig. 9 in Richtung des Pfeiles X gesehen,
- Fig. 11: eine Rückansicht auf den Seitendeckel, in Fig. 9 in Richtung des Pfeiles XI gesehen,
- Fig. 12: eine Draufsicht auf eine Leiterplatte des Kohlenbürstenträgers,
- Fig. 13: eine Draufsicht auf die Motordichtung des Kohlenbürstenträgers und
- Fig. 14: eine Seitenansicht auf den Kohlenbürstenträger nach Fig. 13.

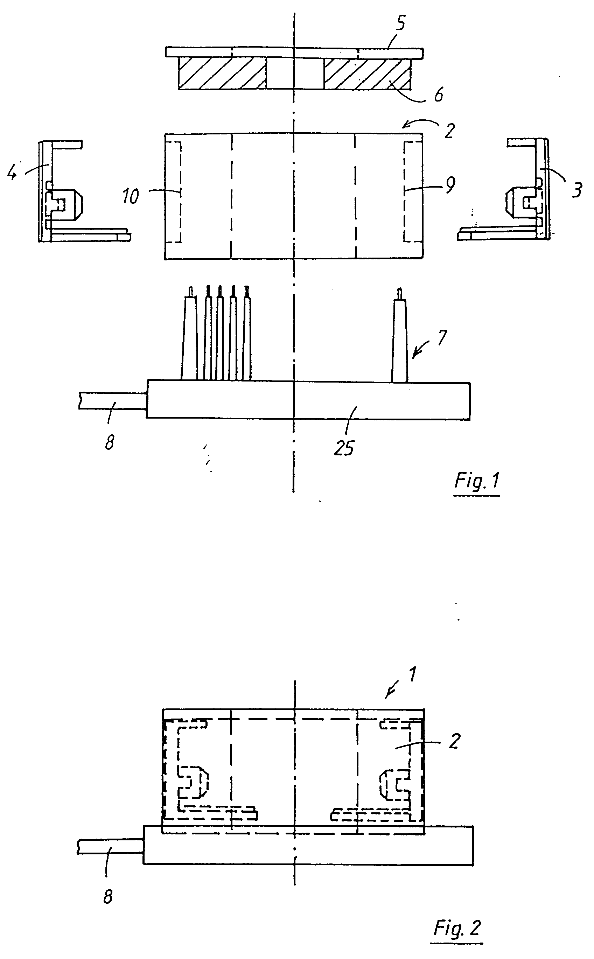

Wie in den Fig. 1 und 2 schematisch dargestellt ist, besteht der Kohlenbürstenträger 1 aus einem im wesentlichen zylindrischen Grundgehäuse 2 mit zwei Seitendeckeln 3, 4, aus einer Leiterplatte 5, die an ihrer Unterseite mit den erforderlichen elektronischen Bauelementen 6 bestückt ist, und aus einer Motordichtung 7, in welcher ein vorkonfektionierter Leitungssatz 8 eingeschoben und in Gießharz vergossen ist. Das Grundgehäuse 2 ist mit Fenstern 9, 10 versehen, durch welche die Kohlenbürsten eingeführt werden, wonach die Fenster 9, 10 durch die Seitendeckel 3, 4 verschlossen werden.

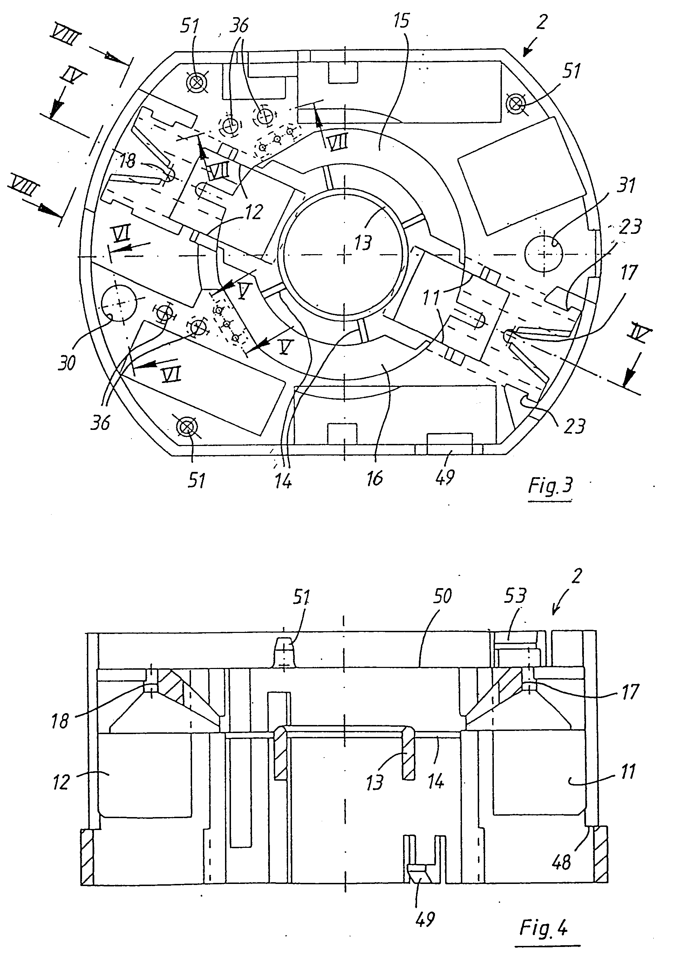

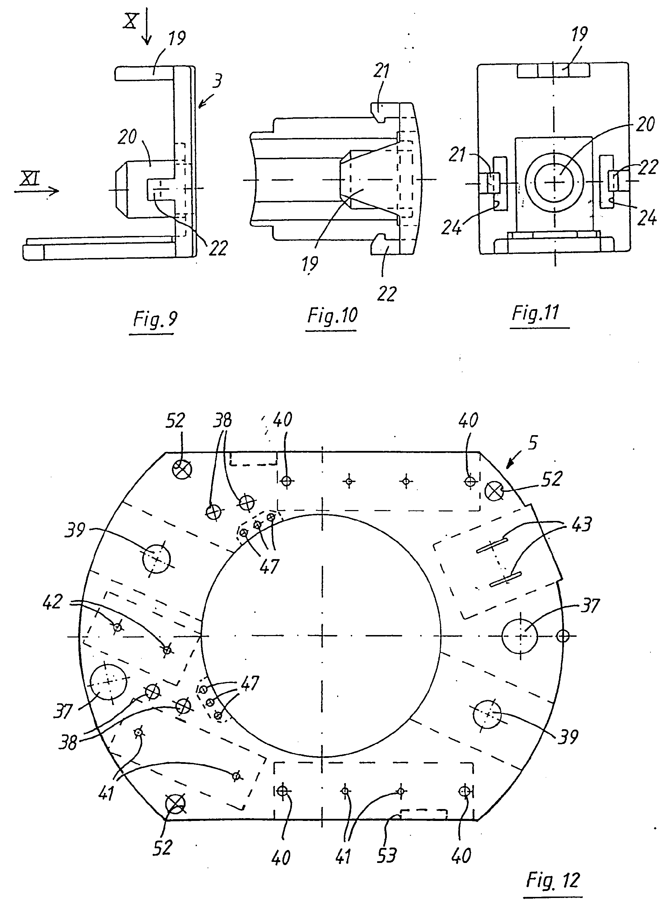

Das Grundgehäuse 2 ist mit einwärts gerichteten Führungswänden 11, 12 für die Kohlenbürsten versehen, vgl. Fig. 3 und 4, die bis zur Anlage an eine zentrale Hülse 13 einschiebbar sind, welche über Sollbruchstege 14 an Bogenstücken 15, 16 abgestützt ist, die die Enden der Führungswände 11, 12 verbinden. Die als verdichtete Kupferlitzen ausgebildeten Anschlußleitungen der nicht gezeigten Kohlenbürsten werden durch jeweils ein radial nach außen hin offenes Aufnahmebett 17, 18 hindurch nach oben hin verlegt und beim Aufschieben der Seitendeckel 3, 4, vgl. auch die Fig. 9 bis 11, mittels eines an den Seitendeckeln angebrachten Klemmansatzes 19 im Aufnahmebett festgespannt. Die Seitendeckel 3, 4 sind ferner mit einem Stützzapfen 20 für eine die Kohlenbürste belastende Schraubendruckfeder (nicht gezeigt) versehen. Jeder Seitendeckel 3, 4 weist zwei seitliche Rastzapfen 21, 22 auf, denen Rastaufnahmen 23 am Grundgehäuse 2 zugeordnet sind. Durch Aussparungen 24 in den Seitendeckeln hindurch können die Rastnasen 21, 22 zurückgedrückt werden, so daß die Seitendeckel zwecks Austausch der Kohlenbürsten abgenommen werden können.

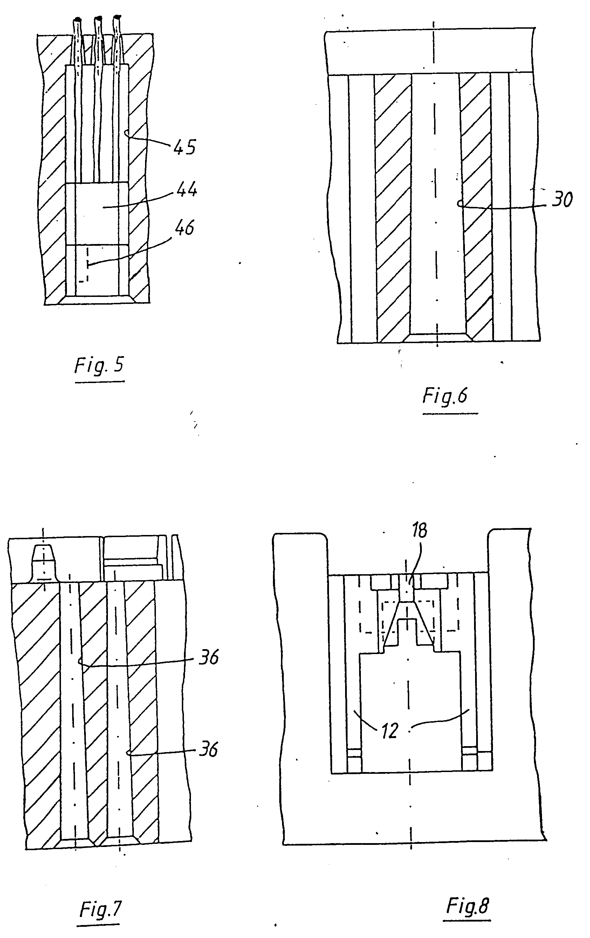

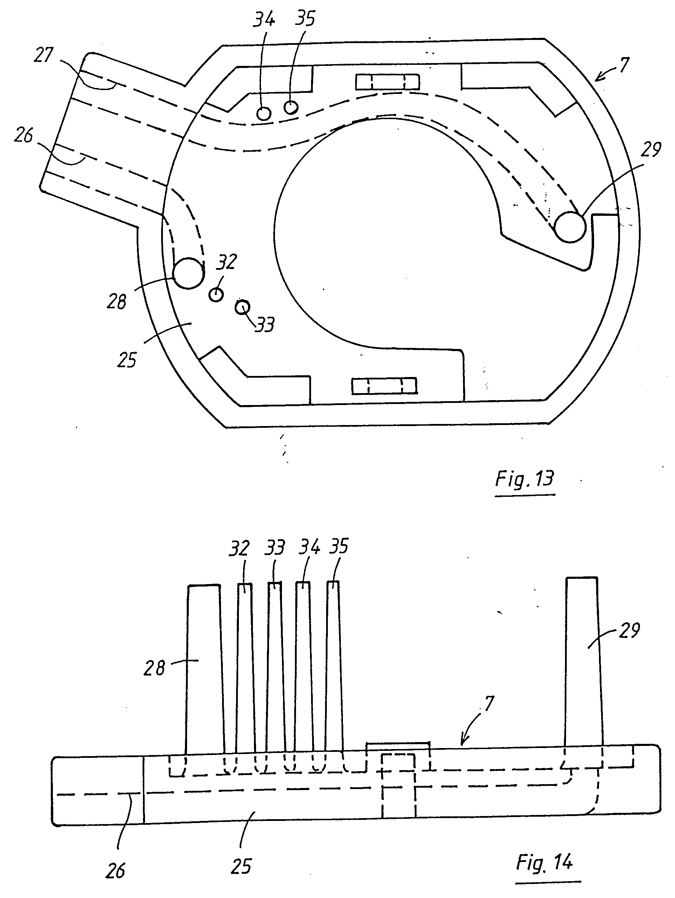

Die Stromdurchführung erfolgt durch die in den Fig. 13 und 14 näher gezeigte Motordichtung 7, bei der es sich um eine Scheibe 25 aus weichelastischem, abdichtendem Kunststoff handelt, die mit Durchführungskanälen 26, 27 für die Versorgungsleitungen versehen ist, die zu aufwärts gerichteten, leicht kegeligen Durchführungsstutzen 28, 29 führen, denen am Grundgehäuse 2 leicht konische Einschubkanäle 30, 31 zugeordnet sind, vgl. auch Fig. 6. In der Motordichtung 7 sind weitere, nicht gezeigte Durchführungskanäle für Steuerleitungen vorgesehen, die ebenfalls zu nach oben gerichteten, leicht kegeligen Durchführungsstutzen 32, 33, 34, 35 führen und denen am Grundgehäuse 2 weitere, leicht konisch zulaufende Einschubkanäle 36 zugeordnet sind, vgl. auch Fig. 7.

In Fig. 12 sind auf der Leiterplatte 5 Anschlußstellen 37 für den Motorstromkreis angedeutet, auf welche die Durchführungsstutzen 28, 29 der Motordichtung und die Einschubkanäle 30, 31 der Motordichtung ausgerichtet sind. Ferner sind die Anschlußstellen 38 für die Steuerleitungen und Anschlußstellen 39 für die zu den Kohlenbürsten führenden Kupferlitzen gezeigt. Die Leiterplatte 5 ist jeweils an der Unterseite der Anschlußstellen 40 mit zwei Drosseln, unterhalb der Anschlußstellen 41 mit Kondensatoren und unterhalb der Anschlußstelle 42 mit einem Varistor und unterhalb der Anschlußstelle 43 mit einem Bimetall-Schalter bestückt.

Der Kohlenbürstenträger weist ferner Hall-Sensoren 44 auf, die jedoch beim gezeigten Ausführungsbeispiel nicht an der Leiterplatte 5, sondern in Aussparungen 45 des Grundgehäuses untergebracht sind, vgl. Fig. 5 und dort durch eine gestrichelt angedeuteten Rastnase 46 gehalten sind. Die Anschlußleitungen der Hall-Sensoren sind zu den Anschlußstellen 47 der Leiterpfatte 5 geführt.

Nachdem die Motordichtung 7 mit dem Leitungssatz 8, das Grundgehäuse 2 mit den Kohlenbürsten - und beim speziellen Ausführungsbeispiel mit Hall-sensoren 44 - und die Leiterplatte 5 mit den übrigen elektronischen Bauteilen bestückt sind, werden diese drei Bauteile zusammen montiert, wobei die Motordichtung 7 bis zu einer unteren Anschlagschulter 48 des Grundgehäuses 2 eingeschoben und durch am Grundgehäuse vorgesehene Rastnasen 49 festgehalten wird. In ähnlicher Weise wird die Leiterplatte 5 bis zu einer Anschlagschulter 50 von oben her in das Gehäuse eingeführt, wobei am Grundkörper vorgesehene Zentrierzapfen 51 in zugeordnete Zentrierbohrungen 52 der Leiterplatte eingreifen. Am Grundgehäuse angebrachte Rastnase 53 schnappen dabei über die Leiterplatte, wie in Fig. 12 gestrichelt angedeutet ist.

### Bezugszeichenliste

1 Kohlenbürstenträger
2 Grundgehäuse
3 Seitendeckel
4 Seitendeckel
5 Leiterplatte
6 Bauelemente
7 Motordichtung
8 Leitungssatz
9 Fenster
10 Fenster
11 Führungswand
12 Führungswand
13 Hülse
14 Sollbruchsteg
15 Bogenstück
16 Bogenstück
17 Aufnahmebett
18 Aufnahmebett
19 Klemmansatz
20 Stützzapfen
21 Rastzapfen
22 Rastzapfen
23 Rastaufnahmen
24 Aussparungen
25 Scheibe
26 Durchführungskanal
27 Durchführungskanal
28 Durchführungsstutzen
29 Durchführungsstutzen
30 Einschubkanal
31 Einschubkanal
32 Durchführungsstutzen
33 Durchführungsstutzen
34 Durchführungsstutzen
35 Durchführungsstutzen
36 Einschubkanäle
37 Anschlußstellen (Lötpads)
38 Anschlußstellen (Lötpads)
39 Anschlußstellen (Lötpads)
40 Anschlußstellen (Lötpads)
41 Anschlußstellen (Lötpads)
42 Anschlußstellen (Lötpads)
43 Anschlußstellen (Lötpads)
44 Hall-Sensoren
45 Aussparung
46 Rastnase
47 Anschlußstellen (Lötpads)
48 Anschlagschulter
49 Rastnasen
50 Anschlagschulter
51 Zentrierzapfen
52 Zentrierbohrungen
53 Rastnase

## Patentansprüche

1. Kohlenbürstenträger (1) aus Kunststoff für den Kommutator eines Elektromotors, welcher (1) mit den erforderlichen elektrischen und elektronischen Bauelementen (6), z.B. Drosseln, Kondensatoren und Thermoschalter, bestückt ist und welcher ein Grundgehäuse (2), das mit einwärts gerichteten Führungswänden (11, 12) zur Aufnahme der Kohlenbürsten versehen ist, eine Motordichtung (7) und ein elektrische Leitungen tragendes, der motorfernen Stirnfläche des Grundgehäuses (2) zugeordnetes Oberteil aufweist, wobei eine Dichtung (7) aus einer mit Durchführungskanälen (26, 27) für elektrische Leitungen (8) versehene Scheibe (25) aus weichelastischem Kunststoff besteht und wobei das Oberteil eine elektrische Schaltung (5) aufweist, gekennzeichnet durch die folgenden Merkmale:
A) die mit Durchführungskanälen (26, 27) versehene Dichtung ist die Motordichtung (7);
B) die elektrischen Leitungen sind als ein vorkonfektionierter Leitungssatz (8) ausgebildet;
C) die elektrische Schaltung ist eine gedruckte Leiterplatte (5);
D) die gedruckte Leiterplatte (5) bildet das Oberteil;
E) die gedruckte Leiterplatte (5) ist an der dem Grundgehäuse (2) zugewandten Seite mit den elektronischen Bauelementen (6) bestückt;
F) die Motordichtung (7) ist mit das Grundgehäuse (2) durchsetzenden und auf Anschlußstellen (37, 38) an der Leiterplatte (5) ausgerichteten Durchführungsstutzen (28, 29, 32, 33, 34, 35) für die Versorgungsleitungen und Steuerleitungen versehen;
G) die Durchführungskanäle (26, 27) und/oder die Durchführungsstutzen sind mit Gießharz oder dergleichen ausgegossen.

2. Kohlenbürstenträger nach Anspruch 1, dadurch gekennzeichnet, daß das Grundgehäuse (2) mit axialen Einschubkanälen (30, 31, 36) zur Aufnahme der Durchführungsstutzen (28, 29, 32, 33, 34, 35) versehen ist.

3. Kohlenbürstenträger nach Anspruch 1 oder 2, dadurch gekennzeichnet, daß das Grundgehäuse (2) mit Einschubfenstern (9, 10) für die Kohlenbürsten versehen ist, die durch Seitendeckel (3, 4) verschließbar sind.

4. Kohlenbürstenträger nach Anspruch 3, dadurch gekennzeichnet, daß die Leiterplatte (5) mit Anschlußstellen (39) für zu den Kohlenbürsten führende Leitungen, z.B. verdichtete Kupferlitzen, versehen ist.

5. Kohlenbürstenträger nach Anspruch 4, dadurch gekennzeichnet, daß am Grundgehäuse (2) radial nach außen hin offene Aufnahmebetten (17, 18) für die Kupferlitzen vorgesehen sind und daß die Seitendeckel (3, 4) mit radial einwärts gerichteten Klemmansätzen (19) zur Festklemmung der Kupferlitzen in den Aufnahmebetten (17, 18) versehen sind.

6. Kohlenbürstenträger nach einem der Ansprüche 1 bis 4, dadurch gekennzeichnet, daß die Seitendeckel (3, 4) je einen Stützzapfen (20) für die Kohlenbürsten belastende Druckfedern aufweisen.

7. Kohlenbürstenträger nach Anspruch 3, gekennzeichnet durch eine lösbare Rastverbindung (21, 22, 23, 24) zwischen Seitendeckeln (3, 4) und Grundgehäuse (2).

8. Kohlenbürstenträger nach einem oder mehreren der Ansprüche 1 bis 7, dadurch gekennzeichnet, daß das Grundgehäuse (2) mit einer zentralen, ausbrechbaren Hülse (13) als Kohlenbürstenanschlag versehen ist.

9. Kohlenbürstenträger nach einem oder mehreren der Ansprüche 1 bis 8, dadurch gekennzeichnet, daß das Grundgehäuse (2) mit inneren Anschlagschultern (48, 50), Zentrierzapfen (51) und Rastnasen (49, 53) zur Aufnahme und Befestigung der Leiterplatte (5) und der Motordichtung (7) versehen ist.

10. Kohlenbürstenträger nach einem der Ansprüche 1 bis 9, dadurch gekennzeichnet, daß am Grundgehäuse (2) axial gerichtete Aussparungen (45) zur Aufnahme von Hall-Sensoren (44) ausgebildet sind, deren Anschlußdrähte zu Anschlußstellen (47) der Leiterplatte (5) geführt sind.

## Claims

1. A carbon brush carrier (1) of plastics material for the commutator of an electric motor, which carbon brush carrier (1) is equipped with the required electrical and electronic components (6) such as chokes, capacitors and temperature switches and has a basic housing (2) provided with inwardly directed guide walls (11, 12) for receiving the carbon brushes, a motor seal (7) and upper part which carries electrical leads and which is associated with the end face of the basic housing (2) remote from the motor, wherein a seal (7) comprises a disc (25) of soft resilient plastics material provided with lead-in channels (26, 27) for electrical leads (8), and wherein the upper part has an electrical circuit (5), characterised by the following features :
A) the seal provided with lead-in channels (26, 27) is the motor seal (7);
B) the electrical leads are in the form of a prefabricated set of leads (8);
C) the electrical circuit is a printed circuit board (5);
D) the printed circuit board (5) forms the upper part;
E) the side of the printed circuit board (5) facing the basic housing (2) is equipped with the electronic components (6);
F) the motor seal (7) is provided with lead-in connecting pieces (28, 29, 32, 33, 34, 35) for the supply leads and control leads, which lead-in connecting pieces pass through the basic housing (2) and are aligned with connection points (37, 38) on the printed circuit board (5);
G) the lead-in channels (26, 27) and/or the lead-in connecting pieces are sealed with casting resin or the like.

2. A carbon brush carrier as claimed in claim 1, characterised in that the basic housing (2) is provided with axial plug-in channels (30, 31, 36) for receiving the lead-in connecting pieces (28, 29, 32, 33, 34, 35).

3. A carbon brush carrier as claimed in claim 1 or 2, characterised in that the basic housing (2) is provided with plug-in windows (9, 10) for the carbon brushes, which plug-in windows are closeable by side covers (3, 4).

4. A carbon brush carrier as claimed in claim 3, characterised in that the printed circuit board (5) is provided with connection points (39) for leads, such as sealed copper stranded wires, leading to the carbon brushes.

5. A carbon brush carrier as claimed in claim 4, characterised in that radially outwardly open reception beds (17, 18) for the copper stranded wires are provided on the basic housing (2), and that the side covers (3, 4) are provided with radially inwardly directed clamping extensions (19) for clamping the copper stranded wires in the reception beds (17, 18).

6. A carbon brush carrier as claimed in one of claims 1 to 4, characterised in that each of the side covers (3, 4) has a support spigot (20) for the compression springs loading the carbon brushes.

7. A carbon brush carrier as claimed in claim 3, characterised by a releaseable snap-in connection (21, 22, 23, 24) between the side covers (3, 4) and the basic housing (2).

8. A carbon brush carrier as claimed in one or more of claims 1 to 7, characterised in that the basic housing (2) is provided with a central sleeve (13) which may be broken away and which serves as a stop for the carbon brushes.

9. A carbon brush carrier as claimed in one or more of claims 1 to 8, characterised in that the basic housing (2) is provided with internal stop shoulder (48, 50), centring spigots (51) and latches (49, 53) for receiving and securing the printed circuit board (5) and the motor seal (7).

10. A carbon brush carrier as claimed in one of claims 1 to 9, characterised in that axially directed recesses (45) for receiving Hall sensors (44) are formed on the basic housing (2), the connecting wires of which Hall sensors are guided to connection points (47) of the printed circuit board (5).

## Revendications

1. Support de balais en charbon (1) constitué en matière synthétique pour le collecteur d'un moteur électrique, lequel support (1) est équipé des éléments électriques et électroniques nécessaires (6), par exemple des bobines, des condensateurs et des commutateurs thermiques, et comprend un boîtier de base (2) muni de parois de guidage (11, 12) dirigées vers l'intérieur et destinées à la réception des balais en charbon, un joint moteur (7) et une partie supérieure associée aux surfaces frontales du boîtier de base (2) qui sont éloignées du moteur et qui supportent des conducteurs électriques, un joint moteur (7) étant constitué par un disque (25) en matière plastique molle et élastique muni de canalisations de traversée (26, 27) pour des conducteurs (8), et la partie supérieure comprenant un circuit électrique (5), caractérisé par les particularités suivantes:
A) le joint muni des canalisations de traversée (26, 27) constitue le joint moteur (7);
B) les conducteurs électriques sont constitués sous forme d'un ensemble de conducteurs (8) préparé à l'avance,
C) le circuit électrique est constitué par une plaquette à circuits imprimés (5),
D) le plaquette à circuits imprimés forme la partie supérieure,
E) la plaquette à circuits imprimés (5) est équipée sur le côté tourné vers le boîtier de base (2) des composants électroniques (6),
F) le joint moteur (7) est muni de tubulures de traversée (28, 29, 32, 33, 34, 35) traversant le boîtier de base (2) en alignement avec des positions de raccordement (37, 38) de la plaquette à circuits imprimés (5) destinées aux conducteurs d'alimentation et aux conducteurs de commande,
G) les canalisations de traversée (26, 27) et/ou les tubulures de traversées sont coulées au moyen d'une résine de coulée ou analogue.

2. Support de balais en charbon selon la revendication 1, caractérisé en ce que le boîtier de base (2) est muni de canalisations axiales enfichables (30, 31, 32) permettant de recevoir les tubulures de traversée (28, 29, 32, 33, 34, 35).

3. Support de balais en charbon selon la revendication 1 ou 2, caractérisé en ce que le boîtier de base (2) est muni de fenêtres insérables (9, 10) pour les balais en charbon, qui peuvent être fermées par des couvercles latéraux (3, 4).

4. Support de balais en charbon selon la revendication 3, caractérisé en ce que la plaquette à circuits imprimés (5) est munie de positions de raccordement (39) pour les conducteurs raccordés au balais en charbon, par exemple des torons de cuivre compactés.

5. Support de balais en charbon selon la revendication 4, caractérisé en ce que des parties de support de réception (17, 18) destinées aux torons de cuivre et ouvertes radialement vers l'extérieur sont prévues dans le boîtier de base (2) et en ce que les couvercles latéraux (3, 4) sont munies de saillies de serrage (19) dirigées radialement vers l'intérieur en vue de la fixation par serrage des torons de cuivre sur les parties de support de réception (17, 18).

6. Support de balais en charbon selon l'une quelconque des revendications 1 à 4, caractérisé en ce que les couvercles latéraux (3, 4) comprennent chacun une saillie d'appui (20) pour les ressorts de compression qui sollicitent les balais en charbon.

7. Support de balais en charbon selon la revendication 3, caractérisé par une liaison par enclenchement dégageable (21, 22, 23, 24) entre les couvercles latéraux (3, 4) et le boîtier de base (2).

8. Support de balais en charbon selon l'une quelconque ou plusieurs des revendications 1 à 7, caractérisé en ce que le boîtier de base (2) est muni d'une douille centrale (13) arrachable constituant une butée pour les balais en charbon.

9. Support de balais en charbon selon l'une quelconque ou plusieurs des revendications 1 à 8, caractérisé en ce que le boîtier de base (2) est muni d'épaulements de butée internes (48, 50), d'une saillie de centrage (51) et de nez d'enclenchement (49, 53) pour recevoir et fixer la plaquette à circuits imprimés (5) et le joint moteur (7).

10. Support de balais en charbon selon l'une quelconque ou plusieurs des revendications 1 à 9, caractérisé en ce que des évidements (45) dirigés axialement sont constitués dans le boîtier de base (2) pour la réception de détecteurs de Hall (44), dont les fils de raccordement sont raccordés aux positions de raccordement (47) de la plaquette à circuits imprimés (5).
